# EUROPEAN PATENT APPLICATION

(11) **EP 4 764 890 A1**
(43) Date of publication of application: **24.06.2026**
(21) Application number: 25223590.8
(22) Date of filing: 15.12.2025
(51) Int. Cl.: G06F 16/34, G06F 16/36

(54) **METHODS, APPARATUSES AND COMPUTER PROGRAM PRODUCTS FOR FACILITATING MESSAGE ORGANIZATION AND BROWSING**

(30) Priority: 18.12.2024 US 202463735670 P; 11.12.2025 US 202519416970
(71) Applicant: Meta Platforms, Inc., Menlo Park, CA 94025 (US)
(72) Inventor: Li, Ziliu, Menlo Park (US)
(74) Representative: Murgitroyd & Company

(57) **Abstract**

A system and method for facilitating message organization and browsing are provided. The system may analyze context data of messages associated with users of a group communication. The system may further determine topics associated with the context data of the messages. The system may further generate, in response to implementing a machine learning model, a hierarchical topic graph indicating the determined topics. The system may further present, by a display device, the hierarchical topic graph indicating the determined topics to a user of the users of the group. The system may further present, by the display device, a message of the messages associated with a topic of the determined topics in response to receipt of a detection of a selection of the topic, by a user, presented in the hierarchical topic graph.

## Description

### TECHNOLOGICAL FIELD

This disclosure relates generally to methods, apparatuses, and computer programs for browsing or exploring messages organized by the topics of the messages.

### BACKGROUND

Messaging threads may be contained in applications (apps) and may include conversations around multiple topics. Locating previous messages related to a specific topic may be difficult, causing a significant amount of time to be spent searching for information related to a topic. Time spent searching for specific messages or topics may cause inefficiency or reduced productivity. Contemporary methods for searching through messages may be limited to searching for specific words, browsing the entire message thread, or providing a high-level overview of the messages covering multiple topics.

The search-based approach may use filters such as time ranges or sender to search tools for specific messages. These methods may be difficult to employ due to the need to enter the correct word or filter, which may be impractical or cumbersome due to small typos or other errors. Although certain messages may be found, it may be difficult to locate related messages within the same topic or conversation if the messages are spread out over a long period of time or mixed with other messages.

Manual browsing may require browsing the entire thread to find specific messages. This manual browsing mechanism is often impractical and time-consuming. Other systems may employ technology to summarize the main points of a chat thread. These summaries may be high level or cover multiple topics, making them less useful for finding messages related to a specific topic.

### SUMMARY

A tool for browsing messages may incorporate a semantic artificial intelligence (AI) model, using a large language model (LLM), to understand and index messages through semantic embedding. The semantic AI model may detect topics of conversation in the messages, based on the context and language of the messages. The AI model may then organize the topics in a hierarchical structure to present the topics in a graph-like or word cloud-like format on a device. A topic may be selected to view messages related to the selected topic. In examples of the present disclosure, users may need to opt in with a system, network, platform, or the like to allow detecting of their messages, communications, chat threads, or the like and the topics of conversation associated with the messages, communications, chat threads, or the like.

According to a first aspect, there is provided a method comprising: analyzing context data of messages associated with users of a group communication; determining topics associated with the context data of the messages; generating, in response to implementing a machine learning model, a hierarchical topic graph indicating the determined topics; presenting, by a display device, the hierarchical topic graph indicating the determined topics to a user of the users of the group; and presenting, by the display device, a message of the messages associated with a topic of the determined topics in response to receipt of a detection of a selection of the topic, by a user, presented in the hierarchical topic graph.

The method may further comprise presenting the hierarchal topic graph in response to detection of an input of a search for the message or a search for a corresponding topic associated with the message.

The hierarchical topic graph may indicate the determined topics comprises a plurality of nodes associated with the determined topics. The method may further comprise detecting a selection of one or more of the nodes, being presented by a display or a user interface, the nodes associated with different sets of the messages of the users associated with a corresponding topic of the selected one or more nodes.

The method may further comprise generating a first node of the hierarchical topic graph to comprise a larger graphical node size in relation to a smaller graphical size of another node of the hierarchical topic graph in response to determining that the first node comprises a quantity of more associated messages corresponding to a first topic of the first node than a lower quantity of other messages corresponding to a second topic of the second node.

The second topic of the second node may comprise a sub-topic of the first topic of the first node. The sub-topic and the first topic may comprise a same category or genre.

The method may further comprise generating the hierarchical topic group to comprise topic groups based on one or more topics being contextually related to one or more other topics, determined based on the messages, wherein the topic groups are organized based on different levels in the hierarchical topic group.

The method may further comprise determining categories, or genres, of detected topics of the messages associated with the topic groups.

The method may further comprise presenting, by the display device, the hierarchical topic graph in relation to a determined result message of the search for the message or the search for the corresponding topic associated with the message.

The context data may comprise determined semantic context associated with the messages.

According to a second aspect, there is provided an apparatus comprising: one or more processors; a display device; and at least one memory storing instructions, that when executed by the one or more processors, cause the apparatus to carry out the method of the first aspect.

According to a third aspect, there is provided a computer-readable medium storing instructions that, when executed by a computing system comprising one or more processors and a display device, cause the computing system to carry out the method of the first aspect. The medium may be non-transitory.

According to a fourth aspect, there is provided a computer program product comprising instructions that, when executed by a computing system comprising one or more processors and a display device, cause the computing system to carry out the method of the first aspect.

In one example of the present disclosure, a method may be provided. The method may include training a chat semantic Al model to understand and index messages. The AI model may be an LLM trained to focus on chat context, temporal information, and user interaction information. Training may be conducted periodically to train the LLM on updated information. The method may further include analyzing a set of messages, associated with a user, to detect topics being discussed. The messages may have been exchanged between one or more other users of a group using a chat tool (e.g., an Al tool) or product on a device. A device may include other devices that may be used for exchanging messages such as computers, laptops, cell phones, tablets, headsets, or any other devices that may enable text or voice-based message exchanges. The method may further include constructing hierarchically organized topic groups. The hierarchical topic groups may be constructed based on the detected topics. The method may further include displaying the hierarchical topics. The topics may be displayed in a graph-like or word cloud-like format. The method may further include displaying messages related to a topic when the topic is selected. The messages may be highlighted based on their informativeness on the selected topic. Topics may be navigated along a hierarchy to control the level of granularity of the interested topic address in the related messages.

In another example of the present disclosure, an apparatus may be provided. The apparatus may include one or more processors and a memory including computer program code instructions. The memory and computer program code instructions may be configured to, with at least one of the processors, cause the apparatus to at least perform operations including analyzing a set of messages, associated with a user, being exchanged on a chat tool or product included in a device to detect topics being discussed. The messages may be exchanged between one or more other users of a group. The memory and computer program code may also be programmed to, with the processor(s), cause the apparatus to implement a large language model including training data pre-trained, or trained in real-time, on historical message data or interactive media shared across various networks (e.g., online social networking sites). The large language model may be trained periodically on updated message data or interactive media. The memory and computer program code may also be configured to, with the processor(s), cause the apparatus to construct hierarchical topic groups based on the detected topics. The memory and computer program code may also be configured to, with the processor(s), cause the apparatus to display, by a user interface or display device, the hierarchical topic groups. The memory and computer program code may also be configured to, with the processor(s), cause the apparatus to display, by a user interface or a display device, messages related to a topic(s) in an instance in which the topic(s) is selected. The memory and computer program code may also be configured to, with the processor(s), cause the apparatus to, by a user interface or a display device, highlight messages based on the messages informativeness within the same topic message set.

In yet another example of the present disclosure, a computer program product is provided. The computer program product may include at least one non-transitory computer-readable medium including computer-executable program code instructions stored therein. The computer-executable program code instructions may include program code instructions configured to analyze a set of messages, associated with a user, exchanged on a chat tool or product included in a device to detect topics being discussed. The set of messages may be exchanged between one or more other users of a group. The computer program product may further include program code instructions configured to implement a large language model including data pre-trained, or trained in real-time, on historical message data or interactive media shared across various online social networking sites. The large language model may be trained periodically on updated message data or interactive media shared across various online social networking sites. The computer program product may further include program code instructions configured to construct hierarchical topic groups based on the detected topics. The computer program product may further include program code instructions configured to display, by a user interface or a display device, the hierarchical topic groups. The computer program product may further include program code instructions configured to display, by a user interface or a display device, messages related to a topic(s) in an instance in which the topic(s) is selected. The computer program product may further include program code instructions configured to display, by a user interface or a display device, highlighted messages based on the messages informativeness on the selected topic.

Additional advantages will be set forth in part in the description which follows or may be learned by practice. The advantages will be realized and attained by means of the elements and combinations particularly pointed out in the appended claims. It is to be understood that both the foregoing general description and the following detailed description are exemplary and explanatory only and are not restrictive, as claimed.

### BRIEF DESCRIPTION OF THE DRAWINGS

The summary, as well as the following detailed description, is further understood when read in conjunction with the appended drawings. For the purpose of illustrating the disclosed subject matter, there are shown in the drawings examples of the disclosed subject matter; however, the disclosed subject matter is not limited to the specific methods, compositions, and devices disclosed. In addition, the drawings are not necessarily drawn to scale. In the drawings:
FIG. 1 is a diagram of an exemplary network environment in accordance with an example of the present disclosure.
FIG. 2 is a diagram of an exemplary communication device in accordance with an example of the present disclosure.
FIG. 3 is a diagram of an exemplary computing system in accordance with an example of the present disclosure.
FIG. 4 illustrates an example flowchart illustrating operations for generating a hierarchical topic group and related messages in accordance with an example of the present disclosure.
FIG. 5 is a diagram illustrating a hierarchical topic group in accordance with exemplary aspects of the present disclosure.
FIG. 6 is a diagram illustrating another hierarchical topic group of the same or similar groups of exchanged messages associated with FIG. 5 in accordance with exemplary aspects of the present disclosure.
FIG. 7 is a diagram illustrating a set of messages related to a selected topic from the constructed hierarchical topic group in accordance with exemplary aspects of the present disclosure.
FIG. 8 is a diagram illustrating another hierarchical topic group of the same or similar groups of exchanged messages associated with FIG. 5 in accordance with exemplary aspects of the present disclosure.
FIG. 9 is a diagram illustrating another set of messages related to a selected topic from the constructed hierarchical topic group in accordance with exemplary aspects of the present disclosure.
FIG. 10 is a diagram illustrating another hierarchical topic group of the same or similar groups of exchanged messages associated with FIG. 5 in accordance with exemplary aspects of the present disclosure.
FIG. 11 is a diagram illustrating another hierarchical topic group of the same or similar groups of exchanged messages associated with FIG. 5 in accordance with exemplary aspects of the present disclosure.
FIG. 12 is a diagram illustrating another set of messages related to a selected topic from the constructed hierarchical topic group in accordance with exemplary aspects of the present disclosure.
FIG. 13 illustrates an example of a machine learning framework in accordance with one or more examples of the present disclosure.
FIG. 14 illustrates a diagram of a user interface presenting determined messages, of a set of messages, along side a determined hierarchical topic group in accordance with examples of the present disclosure.
FIG. 15 illustrates another diagram of a user interface presenting determined messages, of a set of messages, along side another determined hierarchical topic group in accordance with examples of the present disclosure.
FIG. 16 illustrates an exemplary process for generating a hierarchical topic group and determining related messages in accordance with exemplary aspects of the present disclosure.

The figures depict various examples for purposes of illustration only. One skilled in the art will readily recognize from the following discussion that alternative examples of the structures and methods illustrated herein may be employed without departing from the principles described herein.

### DETAILED DESCRIPTION

Some examples of the present invention will now be described more fully hereinafter with reference to the accompanying drawings, in which some, but not all examples of the invention are shown. Various examples of the invention may be embodied in many different forms and should not be construed as limited to the examples set forth herein. Like reference numerals refer to like elements throughout. As used herein, the terms "data," "content," "information" and similar terms may be used interchangeably to refer to data capable of being transmitted, received and/or stored in accordance with examples of the invention. Moreover, the term "exemplary", as used herein, is not provided to convey any qualitative assessment, but instead merely to convey an illustration of an example. Thus, use of any such terms should not be taken to limit the scope of examples of the invention.

As defined herein a "computer-readable storage medium," which refers to a non-transitory, physical or tangible storage medium (e.g., volatile or non-volatile memory device), may be differentiated from a "computer-readable transmission medium," which refers to an electromagnetic signal.

As referred to herein, a Metaverse may denote an immersive virtual space or world in which devices may be utilized in a network in which there may, but need not, be one or more social connections among users in the network or with an environment in the virtual space or world. A Metaverse or Metaverse network may be associated with three-dimensional (3D) virtual worlds, online games (e.g., video games), one or more content items such as, for example, images, videos, non-fungible tokens (NFTs) and in which the content items may, for example, be purchased with digital currencies (e.g., cryptocurrencies) and other suitable currencies. In some examples, a Metaverse or Metaverse network may enable the generation and provision of immersive virtual spaces in which remote users may socialize, collaborate, learn, shop and/or engage in various other activities within the virtual spaces, including through the use of Augmented/Virtual/Mixed Reality.

As referred to herein, semantic context, may refer to the underlying meaning, intent, and/or relevance of messages as the messages relate to ongoing conversation(s) and the shared understanding among participants/users. The semantic text may go beyond the literal text to include, but not limited to, the topic(s) being discussed, the relationships and roles of participants, the history and flow of the conversation(s), the emotional and/or social cues embedded in the messages, and/or the purpose or goal of the conversation/chat (e.g., planning an event, making a decision).

As referred to herein, semantic context content/data may refer to the actual information and/or data within a thread (e.g., a message thread, a chat thread, etc.) that provides the semantic context. The semantic context content may include, but is not limited to, key messages that establish and/or change a topic(s), references to shared knowledge and/or past events in a thread, summaries and/or highlights of important points, metadata such as timestamps, participant/user names, and message threading, emotional tone and/or intent inferred/determined from a conversation(s) and the entities, topic(s) within the messages.

As referred to herein, "contextually related" may refer to the relationship between messages, search terms, and/or content that share a common topic, theme, intent, and/or situational relevance within a conversation(s) and/or dataset. "Contextually related" may mean or denote that certain messages and/or search results may not just be linked by keywords, but may also be linked by their underlying meaning, purpose, and/or the conversational context in which the messages and/or search results appear. For example, even if the messages and/or search results use different words-they may be contextually related because the messages and/or search results may contribute to a same topic(s) and/or goal(s). As such, "contextually related" content may be identified by: 1) shared topics and/or themes, 2) similar intent and/or purpose, 3) relevance to an ongoing conversation(s) and/or user query, and 4) connections established by prior messages, participants, and/or events.

It is to be understood that the methods and systems described herein are not limited to specific methods, specific components, or to particular implementations. It is also to be understood that the terminology used herein is for the purpose of describing particular examples only and is not intended to be limiting.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

Also, as used in the specification including the appended claims, the singular forms "a," "an," and "the" include the plural, and reference to a particular numerical value includes at least that particular value, unless the context clearly dictates otherwise. The term "plurality", as used herein, means more than one. When a range of values is expressed, another example includes from the one particular value or to the other particular value. Similarly, when values are expressed as approximations, by use of the antecedent "about," it will be understood that the particular value forms another example. All ranges are inclusive and combinable. It is to be understood that the terminology used herein is for the purpose of describing particular aspects only and is not intended to be limiting.

Various topics may have been discussed over time in a message thread. Finding messages related to a specific topic may be difficult. Current solutions for searching or browsing messages based on a specific topic may require a significant amount of time to find messages related to a specific topic. These methods may include browsing the message thread, searching for specific words from the thread, or generating a summary of the message thread.

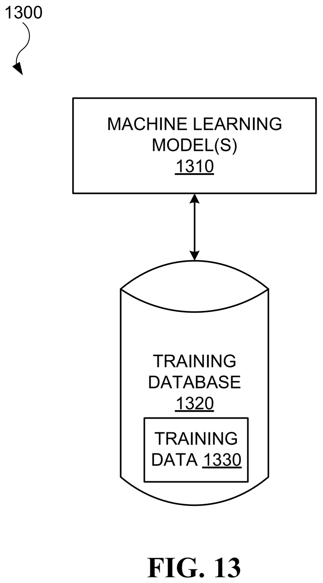

The present disclosure relates to systems or methods for topic driven message browsing using a semantic Al model. The disclosed method may detect topics discussed in a message thread, create topic hierarchical topic groups based on the detected topics, allow for a topic to be selected, and display messages from the message thread related to the selected topic. The Al model may include a semantic Al model, such as a LLM (e.g., machine learning model(s) 1310 of FIG. 13) trained to understand and index messages through semantic embedding. Semantics may be extracted from messages by analyzing the messages meaning, intent, and relationships using natural language processing techniques/LLMs (e.g., machine learning model(s) 1310). This semantic understanding may enable the system to generate vector representations (e.g., semantic embeddings) of each of the messages, capturing the contextual meaning of the messages beyond simple keywords. These embeddings may then utilized to index messages and cluster the messages into hierarchically organized topics, allowing related messages to be grouped and/or displayed under broader themes and/or more specific themes.

The disclosed method may use context-aware clustering for different levels of granularity. The Al model/LLM (e.g., machine learning model(s) 1310) may perform context-aware clustering by analyzing the semantic meaning of messages and representing them as high-dimensional vectors (e.g., embeddings). The AI model/LLM may then group these messages based on their similarity in meaning, rather than just keywords. This may allow the AI model/LLM to form/generate clusters that may reflect shared topics and/or conversational threads (e.g., message threads, chat threads). Clustering may occur at different levels of granularity, including but not limited to, 1) coarse granularity which may group messages into broad topics (e.g., "Sports," "Olympics"), 2) fine granularity, which may further subdivide these groups of messages into more specific subtopics (e.g., "basketball scheduling," "table tennis competition", etc.). This hierarchical approach utilized by the Al model/LLM may enable users to explore conversations from general themes down to detailed discussions, making information (e.g., messages, content of messages) retrieval more intuitive and contextually relevant. The Al model/LLM may analyze the message to determine how closely information in a message relates to a topic to construct/generate the different levels of topics along the hierarchy. Displayed messages may be highlighted based on their informativeness within a selected topic message set. The disclosed method may determine topics to be selected along the hierarchical group (e.g., select "sports", view messages related to sports, then select a sub-topic, such as "table tennis", and view messages more specifically related to table tennis).

The disclosed subject matter may enable several innovations. The disclosed technique may enable the use of Al to understand and index messages based on the topic discussed. The disclosed method may organize hierarchical categories to which the messages are assigned. The disclosed method may enable the messages belonging to a category, or genre, to be viewed after selecting the category, or genre. Sub-topics of a category, or genre, may be selected to view messages more specifically related to the sub-category, or sub-genre.

The disclosed subject matter may enable efficient fetching of accurate messages instead of fetching most or all messages. The disclosed subject matter may reduce the time related to, or associated with, message browsing and exploration. This reduced time may provide technical improvements for computing devices by reducing/conserving processing capacity of processing/processor devices.

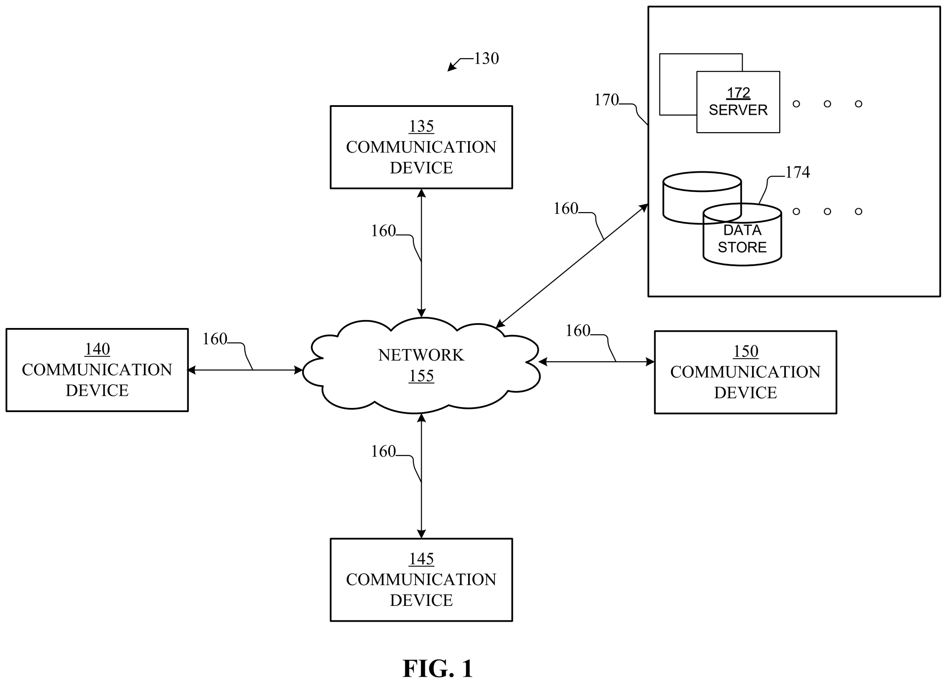

Reference is now made to FIG. 1, which is a block diagram of a system according to examples. As shown in FIG. 1, the system 130 may include one or more communication devices 135, 140, 145 and 150 and a network device 170. Additionally, the system 130 may include any suitable network such as, for example, network 155. In some examples, the network 155 may be a Metaverse network. In other examples, the network 155 may be any suitable network capable of provisioning content and/or facilitating communications among entities within, or associated with the network. As an example and not by way of limitation, one or more portions of network 155 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 155 may include one or more networks 155.

Links 160 may connect the communication devices 135, 140, 145 and 150 to network 155, network device 170 and/or to each other. This disclosure contemplates any suitable links 160. In some examples, one or more links 160 may include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In some examples, one or more links 160 may each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 160, or a combination of two or more such links 160. Links 160 need not necessarily be the same throughout system 130. One or more first links 160 may differ in one or more respects from one or more second links 160.

In some examples, communication devices 135, 140, 145, 150 may be electronic devices including hardware, software, or embedded logic components or a combination of two or more such components and capable of carrying out the appropriate functionalities implemented or supported by the communication devices 135, 140, 145, 150. As an example, and not by way of limitation, the communication devices 135, 140, 145, 150 may be a computer system such as for example a desktop computer, notebook or laptop computer, netbook, a tablet computer (e.g., a smart tablet), e-book reader, Global Positioning System (GPS) device, camera, personal digital assistant (PDA), handheld electronic device, cellular telephone, smartphone, smart glasses, augmented/virtual reality device, smart watches, charging case, or any other suitable electronic device, or any suitable combination thereof. The communication devices 135, 140, 145, 150 may enable one or more users to access network 155. The communication devices 135, 140, 145, 150 may enable a user(s) to communicate with other users at other communication devices 135, 140, 145, 150.

Network device 170 may be accessed by the other components of system 130 either directly or via network 155. As an example and not by way of limitation, communication devices 135, 140, 145, 150 may access network device 170 using a web browser or a native application associated with network device 170 (e.g., a mobile social-networking application, a messaging application, another suitable application, or any combination thereof) either directly or via network 155. In particular examples, network device 170 may include one or more servers 172. Each server 172 may be a unitary server or a distributed server spanning multiple computers or multiple datacenters. Servers 172 may be of various types, such as, for example and without limitation, web server, news server, mail server, message server, advertising server, file server, application server, exchange server, database server, proxy server, another server suitable for performing functions or processes described herein, or any combination thereof. In particular examples, each server 172 may include hardware, software, or embedded logic components or a combination of two or more such components for carrying out the appropriate functionalities implemented and/or supported by server 172. In particular examples, network device 170 may include one or more data stores 174. Data stores 174 may be used to store various types of information. In particular examples, the information stored in data stores 174 may be organized according to specific data structures. In particular examples, each data store 174 may be a relational, columnar, correlation, or other suitable database. Although this disclosure describes or illustrates particular types of databases, this disclosure contemplates any suitable types of databases. Particular examples may provide interfaces that enable communication devices 135, 140, 145, 150 and/or another system (e.g., a third-party system) to manage, retrieve, modify, add, or delete, the information stored in data store 174.

Network device 170 may provide users of the system 130 the ability to communicate and interact with other users. In particular examples, network device 170 may provide users with the ability to take actions on various types of items or objects, supported by network device 170. In particular examples, network device 170 may be capable of linking a variety of entities. As an example and not by way of limitation, network device 170 may enable users to interact with each other as well as receive content from other systems (e.g., third-party systems) or other entities, or to allow users to interact with these entities through an application programming interfaces (API) or other communication channels.

It should be pointed out that although FIG. 1 shows one network device 170 and four communication devices 135, 140, 145 and 150, any suitable number of network devices 170 and communication devices 135, 140, 145 and 150 may be part of the system of FIG. 1 without departing from the scope of the present disclosure.

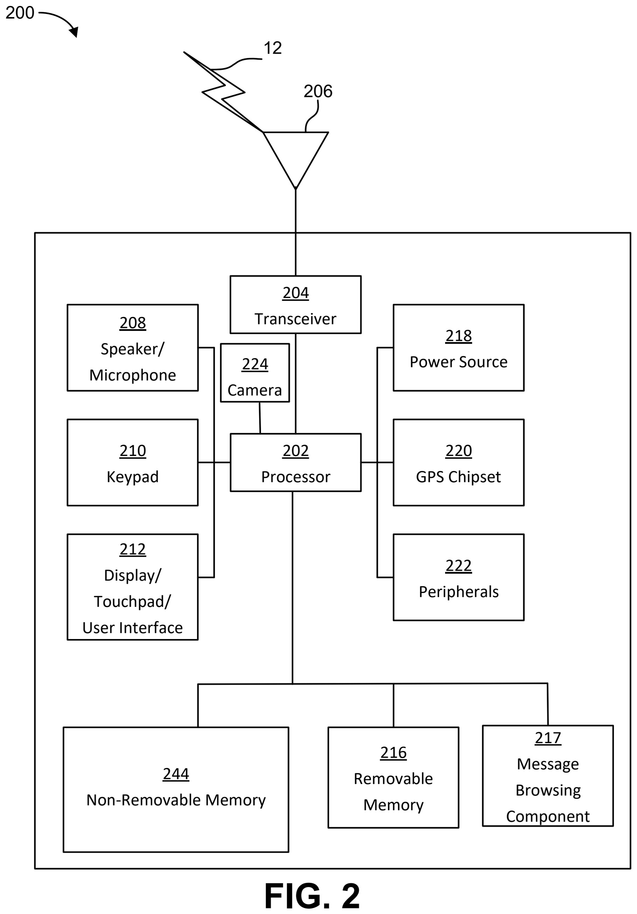

FIG. 2 illustrates a block diagram of an exemplary hardware/software architecture of a communication device such as, for example, user equipment (UE) 200. In some exemplary aspects, the UE 200 may be any of communication devices 135, 140, 145, 150. In some exemplary aspects, the UE 200 may be a computer system such as for example a desktop computer, notebook or laptop computer, netbook, a tablet computer (e.g., a smart tablet), e-book reader, GPS device, camera, personal digital assistant, handheld electronic device, cellular telephone, smartphone, smart glasses, augmented/virtual reality device, smart watch, charging case, or any other suitable electronic device. As shown in FIG. 2, the UE 200 (also referred to herein as node 200) may include a processor 202, non-removable memory 214, removable memory 216, a speaker/microphone 208, a keypad 210, a display, touchpad, and/or user interface(s) 212, a power source 218, a global positioning system (GPS) chipset 220, and other peripherals 222. In some exemplary aspects, the display, touchpad, and/or user interface(s) 212 may be referred to herein as display/touchpad/user interface(s) 212. The display/touchpad/user interface(s) 212 may include a user interface capable of presenting one or more content items and/or capturing input of one or more user interactions/actions associated with the user interface. The power source 218 may be capable of receiving electric power for supplying electric power to the UE 200. For example, the power source 218 may include an alternating current to direct current (AC-to-DC) converter allowing the power source 218 to be connected/plugged to an AC electrical receptable and/or Universal Serial Bus (USB) port for receiving electric power. The UE 200 may also include a camera 224. In an example, the camera 224 may be a smart camera configured to sense images/video appearing within one or more bounding boxes. The UE 200 may also include communication circuitry, such as a transceiver 204 and a transmit/receive element 206. It will be appreciated the UE 200 may include any sub-combination of the foregoing elements while remaining consistent with an example.

The processor 202 may be a special purpose processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. In general, the processor 202 may execute computer-executable instructions stored in the memory (e.g., non-removable memory 214 and/or removable memory 216) of the node 200 in order to perform the various required functions of the node. For example, the processor 202 may perform signal coding, data processing, power control, input/output processing, and/or any other functionality that enables the node 200 to operate in a wireless or wired environment. The processor 202 may run application-layer programs (e.g., browsers) and/or radio access-layer (RAN) programs and/or other communications programs. The processor 202 may also perform security operations such as authentication, security key agreement, and/or cryptographic operations, such as at the access-layer and/or application layer for example.

The processor 202 is coupled to its communication circuitry (e.g., transceiver 204 and transmit/receive element 206). The processor 202, through the execution of computer executable instructions, may control the communication circuitry in order to cause the node 200 to communicate with other nodes via the network to which it is connected.

The transmit/receive element 206 may be configured to transmit signals to, or receive signals from, other nodes or networking equipment. For example, in an example, the transmit/receive element 206 may be an antenna configured to transmit and/or receive radio frequency (RF) signals. The transmit/receive element 206 may support various networks and air interfaces, such as wireless local area network (WLAN), wireless personal area network (WPAN), cellular, and the like. In yet another example, the transmit/receive element 206 may be configured to transmit and/or receive both RF and light signals. It will be appreciated that the transmit/receive element 206 may be configured to transmit and/or receive any combination of wireless or wired signals.

The transceiver 204 may be configured to modulate the signals that are to be transmitted by the transmit/receive element 206 and to demodulate the signals that are received by the transmit/receive element 206. As noted above, the node 200 may have multi-mode capabilities. Thus, the transceiver 204 may include multiple transceivers for enabling the node 200 to communicate via multiple radio access technologies (RATs), such as universal terrestrial radio access (UTRA) and Institute of Electrical and Electronics Engineers (IEEE 802.11), for example.

The processor 202 may access information from, and store data in, any type of suitable memory, such as the non-removable memory 214 and/or the removable memory 216. For example, the processor 202 may store session context in its memory, (e.g., non-removable memory 214 and/or removable memory 216) as described above. The non-removable memory 214 may include RAM, ROM, a hard disk, or any other type of memory storage device. The removable memory 216 may include a subscriber identity module (SIM) card, a memory stick, a secure digital (SD) memory card, and the like. In other examples, the processor 202 may access information from, and store data in, memory that is not physically located on the node 200, such as on a server or a home computer.

The processor 202 may receive power from the power source 218, and may be configured to distribute and/or control the power to the other components in the node 200. The power source 218 may be any suitable device for powering the node 200. For example, the power source 218 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like. The processor 202 may also be coupled to the GPS chipset 220, which may be configured to provide location information (e.g., longitude and latitude) regarding the current location of the node 200. It will be appreciated that the node 200 may acquire location information by way of any suitable location-determination method while remaining consistent with an example.

The UE 200 may also include a message browsing component 217 that may analyze a set of messages to detect one or more topics (e.g., context-based topics) discussed in the messages. Message browsing component 217 may automatically detect topics using context-aware clustering for different levels of granularity. The messages may have been exchanged between one or more devices (e.g., communication devices 135, 140, 145, or 150). In some examples, the message browsing component 217 may construct hierarchically organized topic groups based on the detected topics. In some examples, the message browsing component 217 may implement a semantic artificial intelligence model that may be developed to understand and index messages through semantic embedding. For example, the message browsing component 217 may understand and index messages by converting their content into semantic embeddings such as dense vector representations that capture the underlying meaning and context of each of the messages. In this context, a "semantic embedding" may refer to a numerical encoding of a message's semantics, enabling the message browsing component 217 to compare, cluster, and/or retrieve messages based on meaning of the messages rather than just keywords of the messages. The Al model implemented by message browsing component 217 may include a machine learning model (e.g., machine learning model(s) 1310 of FIG. 13) that may be pre-trained, and/or trained in real-time, with training data (e.g., training data 1330 of FIG. 13) to understand chat context, focus on environmental and contextual factors, understand and focus on temporal factors, and understand user interaction information to detect one or more topics being discussed in a set of messages, as described more fully below. The machine learning model (e.g., machine learning model(s) 1310) may analyze the message to determine how closely information in a message relates to a topic to construct the different levels of topics along the hierarchy. Training data 1330 may include historical chat data from multiple chat tools or products. Training data 1330 may further include interactive media shared across various online social networking sites. Training data 1330 may be updated periodically with data accumulated after any prior update. Machine Learning (ML), Neural Network (NN), Artificial Intelligence (AI), and large language model (LLM) are generally used interchangeably herein.

In some examples, message browsing component 217 may be included, or associated with, a chat tool (e.g., an Al tool) or product within UE 200. In another implementation, a message browsing component 217 may be included in, or associated with, another device (e.g., a server, etc.) located remotely/externally to UE 200.

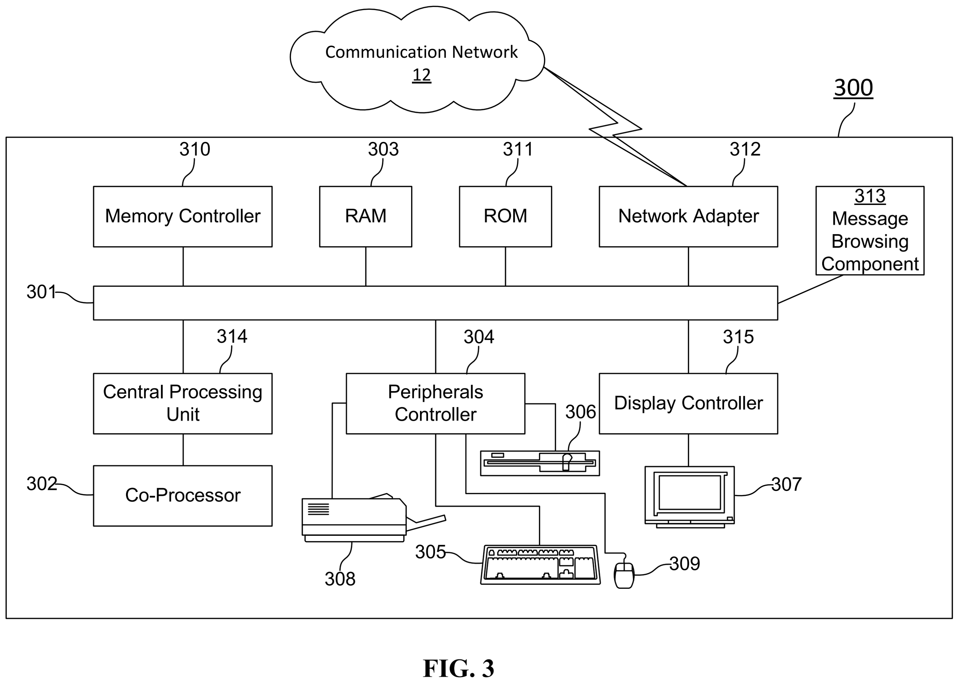

FIG. 3 is a block diagram of an exemplary computing system 300. In some examples, the network device 170 may be a computing system 300. The computing system 300 may comprise a computer or server and may be controlled primarily by computer readable instructions, which may be in the form of software, wherever, or by whatever means such software is stored or accessed. Such computer readable instructions may be executed within a processor, such as central processing unit (CPU) 314, to cause computing system 300 to operate. In many workstations, servers, and personal computers, central processing unit 314 may be implemented by a single-chip CPU called a microprocessor. In other machines, the central processing unit 314 may comprise multiple processors. Coprocessor 302 may be an optional processor, distinct from main CPU 314, that performs additional functions or assists CPU 314.

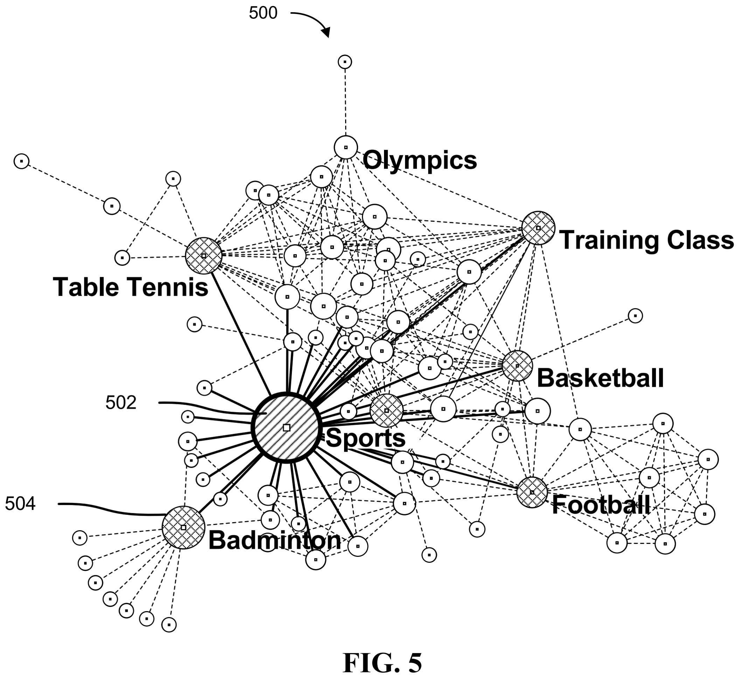

In operation, CPU 314 fetches, decodes, and executes instructions, and transfers information to and from the computer's main data-transfer path, system bus 301. Such a system bus connects the components in computing system 300 and defines the medium for data exchange. System bus 301 typically includes data lines for sending data, address lines for sending addresses, and control lines for sending interrupts and for operating the system bus. An example of such a system bus 301 is the Peripheral Component Interconnect (PCI) bus. The computing system 300 may also include a message browsing component 313 that may analyze messages to detect one or more topics discussed in the messages and construct hierarchical topic groups based on the detected topics (e.g., "sports", "table tennis", "Olympics", "training class", "basketball", "football", and "badminton", as displayed in FIG. 5, FIG. 6, FIG. 8, FIG. 10, or FIG. 11). The message browsing component 313 may facilitate the display of the hierarchical topic(s) associated with the messages via display 307. In some examples, the message browsing component 313 may organize the hierarchy of topics based on the level of granularity of the information contained in the associated messages. In some examples, the message browsing component 313 may implement a machine learning model (e.g., machine learning model(s) 1310 of FIG. 13) that may be pre-trained, and/or trained in real-time, with training data (e.g., training data 1330 of FIG. 13) to understand chat context, focus on environmental and contextual factors, understand and focus on temporal factors, and understand user interaction information to detect one or more topics being discussed in a set of messages.

In some examples, the message browsing component 313 may detect one or more message topics in response to determining or receiving content input by, or associated with, one or more users (e.g., a user or a set/group of users, e.g., users in a group communication). The input may be input content or captured content by one or more user interfaces (e.g., display/touchpad/user interface(s) 212) of one or more communication devices (e.g., UEs 200). For instance, in some examples, the message browsing component 217 may provide the content input to (or captured by) a user interface(s), by or associated with a user(s), to the message browsing component 313 of the computer system 300. The providing of the content input to or captured by the user interface by the message browsing component 217 to the message browsing component 313 may enable the message browsing component 313 to detect discussion topics in a set of messages. In some example aspects of the present disclosure, the message browsing component 313 may provide the hierarchical topic groups and associated messages to one or more communication devices (e.g., UEs 200), which may present the hierarchical topic groups and associated messages via a user interface and/or a display (e.g., display/touchpad/user interface(s) 212). In one example, the hierarchical topics may be displayed in a graph-like format. In another example, the hierarchical topics may be displayed in a word cloud-like format (as illustrated in FIG. 5, FIG. 6, FIG. 8, FIG. 10, or FIG. 11). The displayed messages may be highlighted based on their informativeness on the selected topic. In an example, the level of granularity of associated messages may be adjusted by selecting topics at different levels of a topic hierarchy (e.g., selecting "sports" may yield less specific message data than selecting "table tennis").

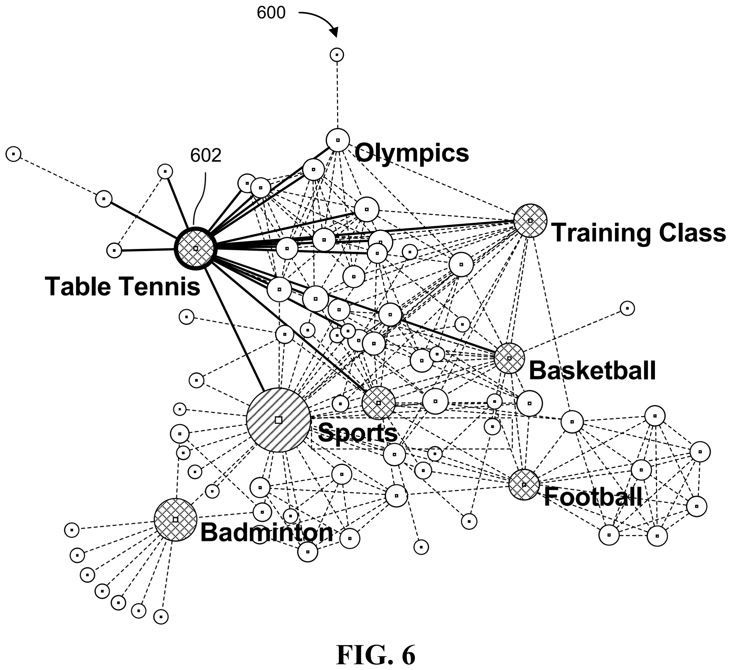

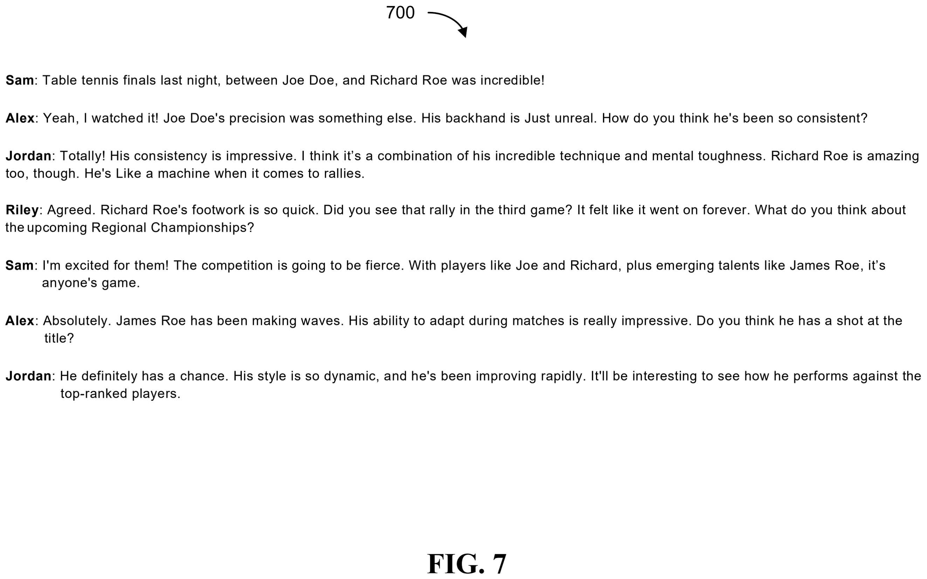

For purposes of illustration and not of limitation, for example, the users of the communication devices may be involved in a group communication (e.g., a group chat or other group communication(s)) and the message browsing component 313 may detect one or more topics of the group communication that may be associated with one or more messages and may utilize the one or more detected topics, in part, to construct/generate the hierarchical topic group(s). In this example, the users of the group may opt in with a network or system (e.g., network 155, system 130) to allow the computing system 300 (e.g., by the message browsing component 313) and/or the UE 200 (e.g., by the message browsing component 217) to detect the one or more topics associated with one or more communications of the group. The hierarchical topic groups may be displayed via the user interfaces (e.g., display/touchpad/user interface(s) 212) of the communication devices of the users in the group communication in an instance in which the message(s) may be uploaded for sharing and/or posted (e.g., published) within, or associated with, the group communication. A user interface (e.g., display/touchpad/user interface(s) 212) may be used to select a topic (as illustrated in FIG. 6 in which the "Table Tennis" topic is selected as denoted by the bold Table Tennis node 602 in FIG. 6). In an instance in which a topic is selected, a user interface (e.g., display/touchpad/user interface(s) 212) may display related messages (e.g., the Table Tennis related messages as illustrated in FIG. 7) associated with the selected topic. In an example, the displayed messages may be displayed with a time series. The machine learning model (e.g., machine learning model(s) 1310) may analyze the message(s) to determine how closely information in a message relates to a topic(s) to construct/generate the different levels of topics associated with the hierarchy. The level of detail, or granularity, presented about a topic may be adjusted by selecting higher or lower terms along a topic hierarchy (e.g., selecting "Sports" may yield less specific message data than selecting "Table Tennis"). In some other examples of the present disclosure, the hierarchical topic group(s) of the messages may be presented via or within a user interface(s) corresponding to a timeline/home page, for example associated with an app(s) or a feeds/news feeds, associated with the app(s), in which the hierarchical topic group(s) of the message(s) may be shared with other users. Additionally, as described more fully below, in some examples of the present disclosure, the detected topics of the communications may be utilized as an input(s) to a machine learning model (e.g., machine learning model(s) 1310), which the message browsing component 313 may implement to perform the detecting/determining of topics of exchanged messages.

Memories coupled to system bus 301 include RAM 303 and ROM 311. Such memories may include circuitry that allows information to be stored and retrieved. ROMs 311 generally contain stored data that cannot easily be modified. Data stored in RAM 303 may be read or changed by CPU 314 or other hardware devices. Access to RAM 303 and/or ROM 311 may be controlled by memory controller 310. Memory controller 310 may provide an address translation function that translates virtual addresses into physical addresses as instructions are executed. Memory controller 310 may also provide a memory protection function that isolates processes within the system and isolates system processes from user processes. Thus, a program running in a first mode may access only memory mapped by its own process virtual address space; it cannot access memory within another process's virtual address space unless memory sharing between the processes has been set up.

In addition, computing system 300 may contain peripherals controller 304 responsible for communicating instructions from CPU 314 to peripherals, such as printer 308, keyboard 305, mouse 309, and disk drive 306.

Display 307, which is controlled by display controller 315, may be used to display visual output generated by computing system 300. Such visual output may include text, graphics, animated graphics, and video. The display 307 may also include, or be associated with a user interface. The user interface may be capable of presenting one or more content items and/or capturing input of one or more user interactions associated with the user interface. Display 307 may be implemented with a cathode-ray tube (CRT)-based video display, a liquid-crystal display (LCD)-based flat-panel display, gas plasma-based flat-panel display, or a touch-panel. Display controller 315 includes electronic components required to generate a video signal that is sent to display 307.

Further, computing system 300 may contain communication circuitry, such as for example a network adaptor 312, that may be used to connect computing system 300 to an external communications network, such as network 12 of FIG. 2, to enable the computing system 300 to communicate with other nodes (e.g., UE 200) of the network.

Some examples of the present disclosure may provide approaches and techniques to facilitate efficient and reliable mechanisms that provide topic driven chat message browsing and which may provide hierarchical topic groups that display messages associated with a selected topic(s). In some example aspects of the present disclosure, the different topics may be determined based, in part, on historical chat data and/or interactive media shared via a network(s) (e.g., social networks (e.g., social networking websites) associated with one or more corresponding users, as described more fully below.

Some examples of the present disclosure may enable a communication device (e.g., UE 200, computing system 300) to implement a machine learning model (e.g., machine learning model(s) 1310), which may detect topics discussed in messages associated with a user or set/group of users that may be participating in a conversation(s) using a user interface (e.g., chat messages exchanged via/by an app). Furthermore, for a same or similar set(s) of messages, the communication device which may implement/execute the machine learning model may construct/generate a hierarchy or topic groups based on levels of granularity or specificity of the related messages to a topic(s). The machine learning model may analyze the message to determine how closely information in a message(s) relates to a topic(s) to construct/generate the different levels of topics associated with the hierarchy.

The communication device may display (e.g., via a display/touchpad/user interface(s) 212 and/or display 307) the hierarchical topics using a chat tool or product (e.g., within an app).

In some example aspects of the present disclosure, the machine learning model(s) (e.g., machine learning model(s) 1310) may utilize one or more inputs such as, for example, a search for information or terms associated with the exchanged messages and/or contextual data associated with the exchanged messages. For purposes of illustration and not of limitation, as an example of the search for information associated with exchanged/communicated messages, consider an example in which the exchanged/communicated messages of users of a group communication (e.g., a group chat) may discuss table tennis at the Olympic Games. In this regard, the machine learning model(s) may analyze details of the messages of the group communication to organize the set of messages into a hierarchical topic(s) group (e.g., a topic group that may be labeled "Sports", with subgroups of "Table Tennis" or "Olympics", etc.).

Regarding the contextual data associated with a user(s) being utilized by the machine learning model(s) as an input(s), the machine learning model(s) may analyze historical data associated with a user such as, for example, one or more interactions of a user (e.g., within, or associated with an app) over/during a predetermined time period to determine user contextual data of a user. As examples, the predetermined time period may be one or more weeks, a month(s), or any other suitable predefined time period(s). Additionally, in some examples the predetermined time period may span a time period from a prior instance of time up to a current real-time. Some examples of historical data associated with one or more interactions of a user (e.g., user historical interactions) may include, but need not be, prior/current messages exchanged between one or more users, determining the interactions associated with prior/current posts of the user, the subject matter/topic of prior/current content read by the user, prior/current likes of the user (e.g., associated with an app). In some aspects of the present disclosure, the users associated with a network or system (e.g., network 155, system 130) may opt in with the network or system to allow the computing system 300 (e.g., by the message browsing component 313) and/or the UE 200 (e.g., by the message browsing component 217) to determine the user historical interactions.

For purposes of illustration and not of limitation, as an example, the machine learning model(s) may analyze the user interaction historical data associated with a user(s) and may determine that the user(s) exchanged/communicated messages (e.g., exchanged messages in a discussion (e.g., a group chat) about the table tennis events during the Olympic Games and other messages about basketball during a predetermined time period). In this regard, for example, the machine learning model(s) may understand the user's use of language to determine what the user's focuses and/or interests include. As such, the machine learning model(s) may learn the focuses and/or interests of a user as contextual data (e.g., user contextual data) based in part on analyzing the user interaction historical data. The machine learning model may utilize this contextual data in part to detect that the user has engaged in discussion about certain topics and may generate/construct hierarchical topic groups by determining the topics discussed based on the focuses, and/or interests of the user(s). For instance, in the example above in which the user exchanged messages about table tennis events during the Olympic games and other messages about basketball, the machine learning model(s) may construct/generate the hierarchical topic groups associated with messages (e.g., the topic groups may include "sports", with the sub-groups being "table tennis", "Olympics", and "basketball"). The hierarchy or topics may correspond to the level of granularity of the details included in the related messages (e.g., messages related to the topic of "sports" may include those discussing all sports, whereas messages related to the topic of "table tennis" may include only those sports related messages that discuss table tennis).

In another example, for purposes of illustration and not of limitation, in an instance in which the machine learning model(s) (e.g., machine learning model(s) 1310) may analyze a different set of exchanged messages and may determine that the exchanged messages discuss seeing birds, like eagles and hawks, at a zoo and animals from an African jungle, like lions and zebras, at the zoo. The machine learning model(s) may detect topics in the exchanged messages and construct/generate hierarchical topic groups (e.g., the topic group "zoo animals" may be created with "birds" as a subtopic of "zoo animals", and "eagles" and "hawks" as subtopics of "birds"; "African animals" may be an additional subtopic of "zoo animals", with "lions" and "zebras" being subtopics of "African animals"). As an example, in response to the machine learning model(s) being implemented/executed by a communication device (e.g., UE 200, computing system 300) such may cause the communication device to display the hierarchical topics via a user interface and/or display (e.g., display/touchpad/user interface(s) 212, display 307). As an example, a topic(s) may be selected, and the messages related to the selected topic may be displayed via the user interface and/or display. In some examples, selection of a topic, by a user via a user interface and/or display, may be denoted in a hierarchical topic(s) by node that is illustrated in bold (e.g., a selected "Table Tennis" bold node 602 in FIG. 6). In some example aspects, the messages may be displayed with a time series. The displayed messages may be highlighted based on their informativeness on the selected topic within the same topic message set. Topics along a hierarchical topic group may be selected to control the level of granularity information presented in the related texts (e.g., selecting "zoo animals" may cause text to be displayed discussing lions, zebras, hawks, and eagles from the zoo; selecting "African animals" may cause text to be displayed discussing lions and zebras; selecting "lions" may cause text to be displayed discussing lions).

In some examples, the machine learning model may utilize a search tool to receive input to the machine learning model which may include information concerning the set of messages to be searched. The search tool may be accessed using a chat tool or product (e.g., within an app). In some examples, the machine learning model(s) may detect a topic based on the information taken as input to the search tool, detect the topic in the exchanged messages, generate/construct hierarchical topic group(s) related to the searched topic, and display the topics or messages related to the topic input into the search tool.

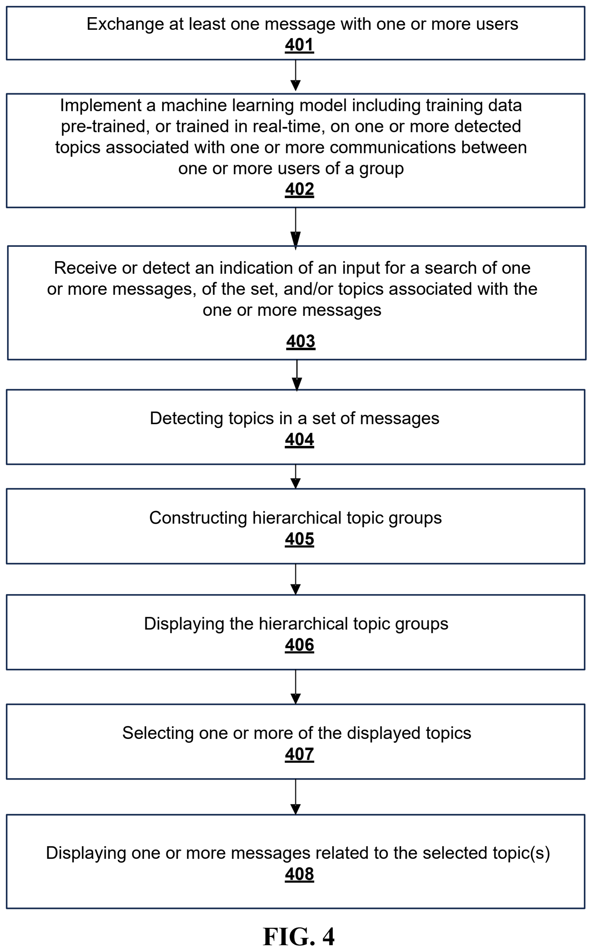

FIG. 4 illustrates an example flowchart illustrating operations for constructing hierarchical topic groups based on discussion topics in a set of exchanged messages according to an example of the present disclosure. At operation 401, a device (e.g., UE 200, computing system 300) may exchange at least one message with one or more users. At operation 402, a device (e.g., UE 200, computing system 300) may implement a machine learning model (e.g., machine learning model(s) 1310). The machine learning model may include training data (e.g., training data 1330) pre-trained, or trained in real-time, on one or more detected topics associated with one or more communications between one or more users of a group. In some example aspects, the user may also be part of the users of the group. At operation 403, a device (e.g., UE 200, computing system 300) may receive or detect an indication of an input for a search of one or more messages, of the set, and/or topics associated with the one or more messages. For example, a user may utilize a user interface (e.g., display/touchpad/user interface(s) 212), display (e.g., display 307), or the like, to enter (e.g., via text data, and/or audio data (e.g., voice prompt)) an input for a search of one or more messages (e.g., prior messages) of a communication(s) (e.g., a group communication(s) (e.g., chat thread(s), etc.) and/or topics of the messages of one or more users). At operation 404, a device (e.g., UE 200, computing system 300) may automatically detect topics in a set of messages. The device may use context aware clustering to detect topics based on different levels of granularity of information contained in the messages. At operation 405, a device (e.g., UE 200, computing system 300) may construct hierarchical topic groups based on the detected topics. Hierarchical topic groups may be organized based on the level of granularity of information contained in messages related to a set of topics. The device (e.g., UE 200, computing system 300) may analyze the message(s) to determine how closely information in a message relates to a topic to construct the different levels of topics along the hierarchy.

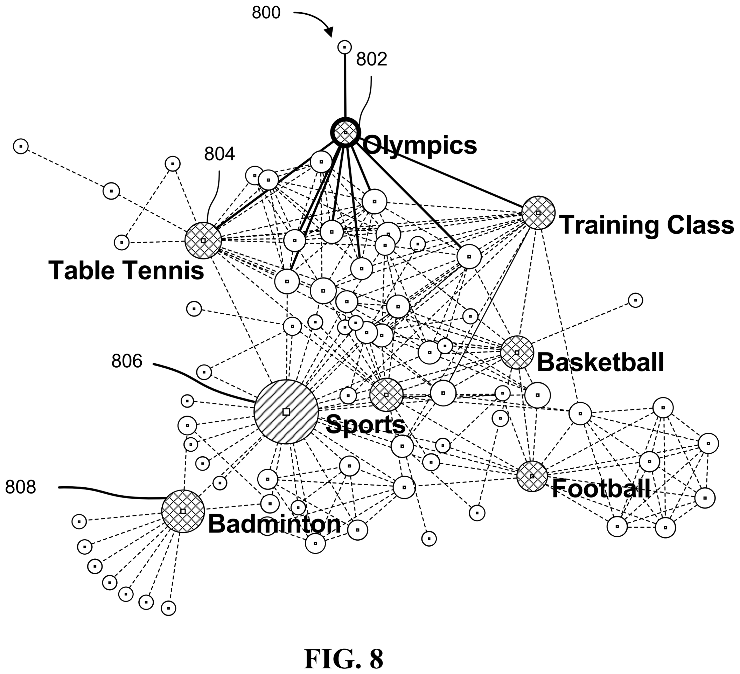

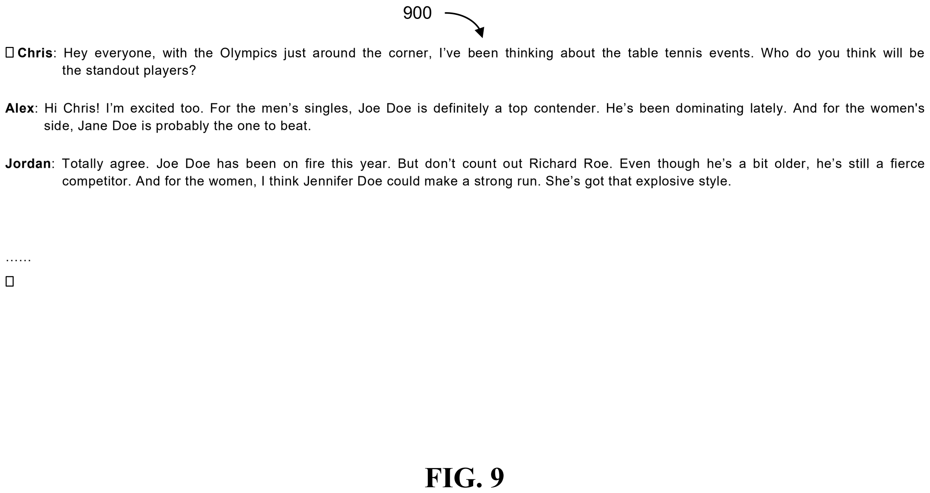

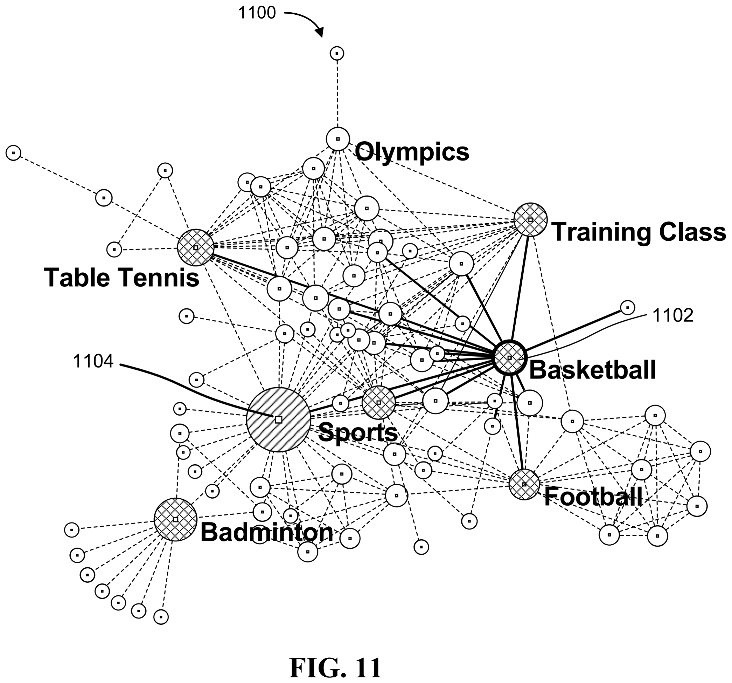

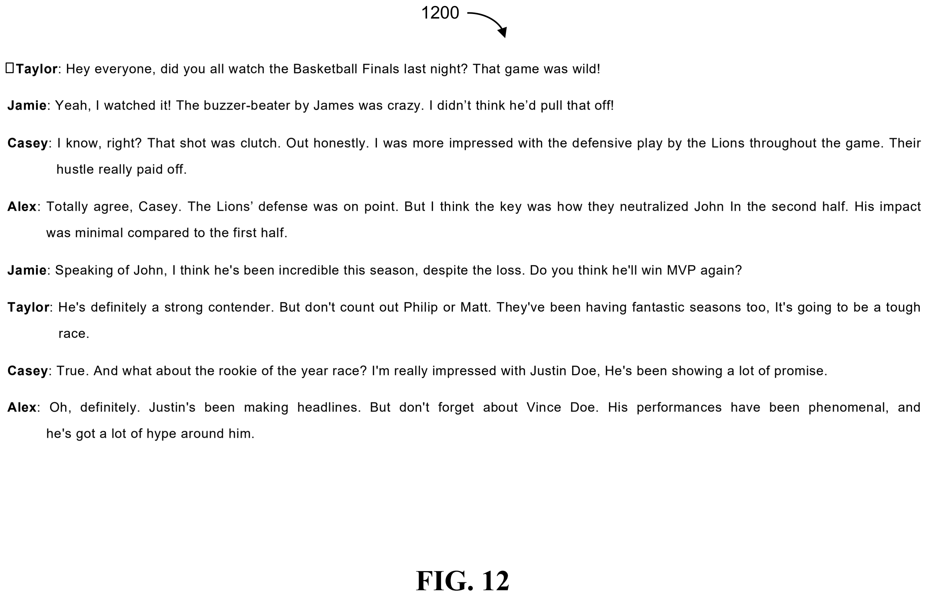

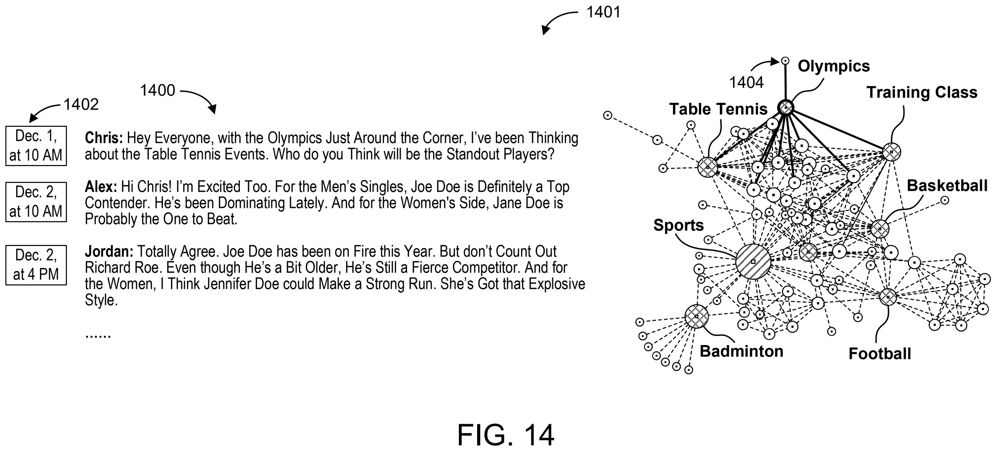

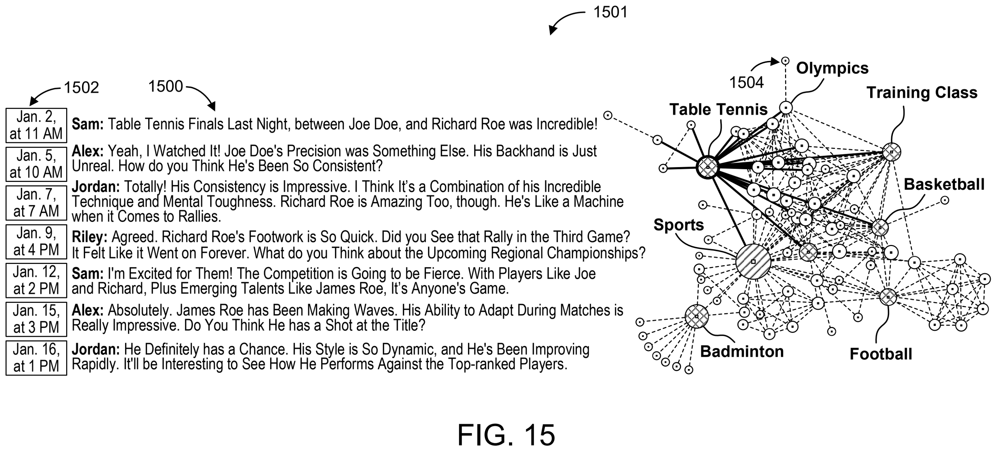

At operation 406, a device (e.g., UE 200, computing system 300) may display, by/via a user interface or a display device, the hierarchical topic groups (e.g., as illustrated in FIG. 5, FIG. 6, FIG. 8, FIG. 10, or FIG. 11) using a chat tool (e.g., an AI tool, an AI bot) or product (e.g., with an app). In some examples, the user interface or the display device may be a display/touchpad/user interface(s) 212 or a display 307. In some examples, the topics may be displayed in a graph-like or word cloud-like format. At operation 407, one or more displayed topics may be selected (e.g., FIG. 5 illustrates an example of "Sports" being selected and highlighted, as denoted by the bold "Sports" node 502; FIG. 6 illustrates an example of "Table tennis" being selected and highlighted, as denoted by the bold "Table Tennis" node 602). The topic may be selected while being displayed by a device (e.g., UE 200, computing system 300) using a user interface (e.g., display/touchpad/user interface(s) 212, display 307). At operation 408, a device (e.g., UE 200, computing system 300) may display one or more messages (e.g., as illustrated in the Table Tennis messages 700 of FIG. 7, the Olympics messages 900 of FIG. 9, and/or the Basketball messages 1200 of FIG. 12) related to the selected topic (e.g., as illustrated by the selected bold "Table Tennis" node 602 in FIG. 6, the selected bold "Olympics" node 802 in FIG. 8, and/or the selected bold "Basketball" node 1102 in FIG. 11). In some other example aspects, the messages may be displayed side by side with the selected topics (see e.g., FIG. 14 and FIG. 15). In some other examples, the messages may be displayed with a time series (e.g., time series 1402 of FIG. 14, time series 1502 of FIG. 15). In other example aspects, the messages may be highlighted based on their informativeness associated with a selected topic(s). As an example, one or more highlighted colors may correspond to a level(s) of informativeness associated with a selected topic(s).

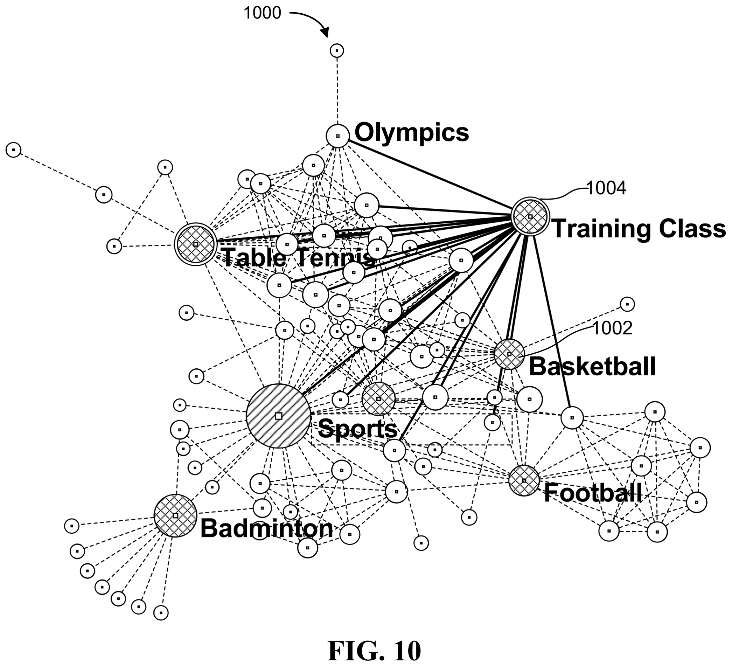

Consider a scenario in which a group of users may be exchanging messages (e.g., within an app) using communications devices (e.g., UE(s) 200, computing system(s) 300). A user may utilize a device (e.g., UE 200, computing system 300) initiate a search for one or more terms associated with one or more topics discussed in the exchanged messages (e.g., within an app). The method may enable the device to utilize a message browsing component (e.g., message browsing component 217 or message browsing component 313) to detect topics discussed within the exchanged messages. The method may further utilize context-aware clustering to link topics and subtopics (e.g., topics and subtopics of discussion within the exchanged messages) based on their relatedness. The method may then facilitate display of hierarchically organized topic groups (e.g., as illustrated in FIG. 5, FIG. 6, FIG. 8. FIG. 10, or FIG. 11) by the device using a display (e.g., display/touchpad/user interface(s) 212 or display 307). The user may then select a topic or subtopic using the display/user interface. The selected topic may be highlighted by the display/user interface (e.g., by a bold topic node). The device may then display the messages associated with the selected topic using a display (e.g., display/touchpad/user interface(s) 212 or display 307). In an alternative example, the messages associated with the selected topic(s) may be displayed alongside the topic group displaying the selected topic(s). For example, FIG. 14 illustrates displayed messages (e.g., messages 1400) via a user interface (e.g., user interface 1401) alongside topic groups (e.g., topics 1404). Additionally, FIG. 15 illustrates displayed messages (e.g., messages 1500) via a user interface (e.g., user interface 1501) alongside topic groups (e.g., topics 1504). In some examples, the presentation of displayed messages (e.g., messages 1500) alongside topic groups (e.g., topics 1504) may be triggered automatically by the AI model-such as in an instance in which a user initiates a search or enters a conversation view, via a user interface (e.g., display/touchpad/user interface 212 or display 307), configured to show hierarchical topics. In some other examples, the presentation of displayed messages (e.g., messages 1500) alongside topic groups (e.g., topics 1504) may be generated in an instance in which a user selects a specific option or/and setting in a user interface to organize and display results in this structured manner. The exact functionality of displaying the messages alongside topic groups may depend on the configuration and/or user preferences, allowing for both automated and user-driven presentation of messages and topic hierarchies.

The method may enable a faster and more efficient search of messages to determine/detect messages (e.g., group communication messages) including specific information associated with one or more topics of interest to a user(s) in a reliable and user-friendly manner. This enabling of faster and more efficient searches of messages to determine/detect messages, based on topics of interest to users, may enhance user interactions and user engagement by users via user interfaces (e.g., display/touchpad/user interface 212 or display 307) facilitating the searches and presenting the results of the efficient searches of the messages based on the ease of selecting the topics (via user interfaces associated with the messages) determined by the exemplary aspects of the present disclosure, which are incapable of being performed by a human. For instance, a human is unable to perform the search of the messages based on determined topics arranged in hierarchies and present these efficient and beneficial results as outputs in user interfaces in a fast manner via user interfaces and/or display devices. In some examples, by utilizing the hierarchical topic graphs of the exemplary aspects to facilitate searches of messages associated with topics that are indexed and stored (e.g., by a memory device) at a network device, the network device may conserve bandwidth across the network (e.g., network 155) by minimizing traffic (e.g., data/content) associated with minimizing/reducing multiple requests for messages since the messages may be linked to the presented hierarchal topic graph(s) and available for presentation upon selection by a user.

Referring now to FIG. 5, a diagram illustrating hierarchical topics displayed in graph-like format, such as topic graph 500, is provided in accordance with exemplary aspects of the present disclosure. In the example of FIG. 5, consider a scenario in which one or more devices may be participating in a group communication (e.g., group messaging) to exchange messages concerning different topics centered around sports (e.g., table tennis, Olympics, training class, basketball, football, and badminton). In an example, a user may utilize a device (e.g., UE 200, computing system 300) to conduct a search (e.g., search within an app) of terms contextually related to a set of topics centered around sports (e.g., table tennis, Olympics, training class, basketball, football, and badminton). A message browsing component (e.g., message browsing component 217, or message browsing component 313) of a communication device (e.g., UE 200, computing system 300) may detect topics discussed (e.g., "sports", "table tennis", "Olympics", "training class", "basketball", "football", and "badminton") and may utilize context-aware clustering to link topics and subtopics based on their relatedness (as illustrated in FIG. 5). The message browsing component may perform context-aware clustering which may analyze the semantic relationships between messages to identify and group together those messages that share similar meanings and/or conversational intent. By doing so, the message browsing component may automatically determine linked topics and subtopics, organizing related discussions into a hierarchical structure that reflects both broad themes and more specific areas of focus. This method may allow for faster more efficient searching to find messages associated with a specific topic(s). In this example, the hierarchical topic groups may be displayed within a user interface or display (e.g., display/touchpad/user interface 212 or display 307). In some examples, larger nodes associated with the topics may denote/indicate a higher level of the topic hierarchy (e.g., more messages associated with larger nodes) than topics associated with smaller nodes (e.g., fewer messages that messages associated with larger nodes). For purposes of illustration and not of limitation, the sports node 502, being a larger node in size relation to a size of the badminton node 504, may have more messages associated with the sports node 502 than the messages of the badminton node 504. In the example of FIG. 5, the highlighted sports node 502 may be selected (e.g., by a user via a user interface (e.g., display/touchpad/user interface 212 or display 307)). Selection of the sports node 501 may cause/trigger presentation by a user interface (e.g., display/touchpad/user interface 212 or display 307) of messages of users (e.g., users of a group communication) associated with the sports topic, which is associated with the sports node 501.

In an alternate aspect, the device may implement the message browsing component (e.g. message browsing component 217 or message browsing component 313) to automatically detect the topics discussed (e.g., "sports", "table tennis", "Olympics", "training class", "basketball", "football", and "badminton") and may utilize context-aware clustering to link topics and subtopics based on their relatedness (as illustrated in FIG. 5).

Referring now to FIG. 6, another diagram illustrating hierarchical topics displayed in a graph-like format, such as topic graph 600, is provided in accordance with exemplary aspects of the present disclosure. As illustrated in the example of FIG. 6, a hierarchical topic group may be constructed by the message browsing component (e.g., message browsing component 217 or message browsing component 313) in an instance in which the message browsing component detects topics discussed in a set of messages. In an example, a topic may be selected (e.g., selecting "table tennis" in the example of FIG. 6) and a chat thread or tool (e.g., within an app) may display related messages (e.g., messages related to "table tennis"), as illustrated in FIG. 7. In an example, the selected topic may be highlighted (e.g., denoted by a bold node (e.g., bold table tennis node 602) associated with "table tennis" in FIG. 6). In an alternate example aspect, a topic may be selected (e.g., "table tennis" may be selected in the example of FIG. 6) and a chat thread or tool (e.g., within or associated with an app) may display related messages (e.g., messages illustrated in FIG. 7) alongside the topic graph (e.g., the topic graph 600 shown in FIG. 6) within a user interface or display (e.g., display/touchpad/user interface 212 or display 307). For example, FIG. 15 illustrates related messages (e.g., messages 1500 (e.g., of messages 700)) alongside the topic graph 1500 (e.g., of the topic graph 600). In some examples, larger nodes associated with the topics may indicate a higher level of the topic hierarchy than topics associated with smaller nodes.

Referring now to FIG. 7, a diagram illustrating a set of messages 700 related to a selected topic from the constructed hierarchical topic group is provided in accordance with exemplary aspects of the present disclosure. In the example of FIG. 7, consider a scenario in which the message browsing component (e.g., message browsing component 217 or message browsing component 313) has detected topics in a set of exchanged messages (e.g., the topics may include "sports", "table tennis", "Olympics", "training class", "basketball", "football", and "badminton"). A hierarchical topic group 600 may be constructed (e.g., as illustrated in FIG. 6) by a message browsing component (e.g., message browsing component 217 or message browsing component 313) and displayed within a user interface or display (e.g., display/touchpad/user interface 212 or display 307). A topic may be selected (e.g., selecting "table tennis" node 602 in the example of FIG. 6) and a chat thread or tool (e.g., within an app) may display related messages 700 (e.g., messages 700 related to "table tennis", as illustrated in FIG. 7). In an example, the selected topic may be highlighted using display/touchpad/user interface 212 or display 307 s(e.g., "table tennis" is denoted as highlighted based on the bold "table tennis" node 602).

A message browsing component (e.g., message browsing component 217, message browsing component 313) of a communication device (e.g., UE 200, computing system 300) may understand and may index messages in a set of exchanged messages (e.g., in a chat thread or tool by/via an app). The index messages may be stored in a memory device (e.g., non-removable memory 214, removable memory 216, RAM 303, ROM 311) in an efficient manner based on an arrangement of the index of the set of exchanged messages such that the memory device may achieve memory conservation (e.g., memory space conservation) which is a technical improvement provided by the exemplary aspects of the present disclosure. For example, when performing the indexing and storage of the messages in memory devices, the variant lengths of the messages (e.g., tens/hundreds of words) and their associated information/content may be compressed to a small fixed size embedding (e.g., vector(s)), which may facilitate/provide memory conservation (e.g., conserve memory space) of memory devices. In this example, the message browsing component, e.g., by implementing the machine learning model, may analyze the contents of the messages to detect topics which may be clustered into hierarchical topic groups based on context. The message browsing component may analyze the contents of messages by extracting semantic features and identifying patterns that indicate underlying topics, and may group these messages into hierarchical topic clusters based on their contextual similarity such as, for example, shared subject matter, conversation flow, and/or participant/user intent. This grouping/clustering may be dynamic and may adapt to context. For purposes of illustration and not of limitation, for example, the message browsing component may (e.g., dynamically) cluster messages about "project deadlines" together during a work discussion, or grouping about "venue suggestions" in the context of event planning, ensuring that the topic hierarchy reflects the actual focus and evolution of the conversation(s). The message browsing component may construct/generate hierarchical topic groups and may display the hierarchical topics via a user interface or display (e.g., display/touchpad/user interface(s) 212 or display 307) to enable the user to select a topic(s) and view messages related to the selected topic. The related messages (e.g., messages 700 related to "table tennis", as illustrated in FIG. 7) may be displayed side by side with the topic graph (e.g., the topic graph 600, as illustrated in FIG. 6) in the user interface. For example, FIG. 15 illustrates the messages 1500 (an e.g., of messages 700) related to table tennis displayed side by side with the topic graph 1504 (an e.g., of topic graph 600). In some other examples, the displayed messages 1500 may be displayed with a time series (e.g., time series 1502 (also referred to herein as timesteps 1502)).

Referring now to FIG. 8, another diagram illustrating hierarchical topics displayed in a graph-like format, such as topic graph 800, is provided in accordance with exemplary aspects of the present disclosure. As illustrated in the example of FIG. 8, a hierarchical topic group, associated with topic graph 800, may be constructed by the message browsing component (e.g., message browsing component 217 or message browsing component 313) in an instance in which the message browsing component detects/determines topics discussed in a set of messages (e.g., messages 900 associated with table tennis and other messages associated with the Olympics, training class, basketball, sports, badminton and football). The message browsing component (e.g., message browsing component 217 or message browsing component 313) may analyze the message(s) to determine how closely information in a message relates to a topic to generate/construct the different levels of topics along the hierarchy. The message browsing component may determine the similarity of the messages to the topics (e.g., clustered/generated) to describe how close and similar a message(s) is for a given topic, and the message(s) may then be assigned to the closest topic(s) (e.g., a most similar topic(s)). A topic may be selected (e.g., "Olympics" may be selected as a subtopic of "table tennis" 804 in the example of FIG. 8, as denoted by the "Olympics" node 802 being smaller than the "table tennis" node 804) and a chat thread or tool (e.g., within an app) may display related messages. The selection (e.g., by a user via display/touchpad/user interface 212 or display 307) of the topic Olympics may be illustrated by the bold Olympics node 802 in FIG. 8. Different topics along the hierarchy of the topic group may be selected to control the granularity of the information contained in the related messages (e.g., selecting "Olympics" as a subtopic of "table tennis", as illustrated in FIG. 8 may cause the messages 900 related to table tennis in the Olympics to be displayed, as illustrated in FIG. 9). In some examples, larger nodes (e.g., sports node 806) associated with the topics may indicate a higher level of the topic hierarchy than topics with smaller nodes (e.g., table tennis node 804, Olympics node 802, badminton node 808, etc.).

Referring now to FIG. 9, another diagram illustrating a set of messages 900 relating to a selected topic from a generated/constructed hierarchical topic group is provided in accordance with exemplary aspects of the present disclosure. In the example of FIG. 9, consider a scenario in which the message browsing component (e.g., message browsing component 217 or message browsing component 313) has detected topics in a set of exchanged messages (e.g., the topics may include "sports", "table tennis", "Olympics", "training class", "basketball", "football", and "badminton"). A hierarchical topic group (e.g., topic group 800) may be constructed/generated (e.g., as illustrated in FIG. 8) by a message browsing component (e.g., message browsing component 217 or message browsing component 313) and may be displayed within a user interface or display (e.g., display/touchpad/user interface 212 or display 307). The message browsing component (e.g., message browsing component 217 or message browsing component 313) may analyze the message(s) to determine how closely information in a message relates to a topic(s) to construct the different levels of topics associated with the hierarchy (e.g., topic group 800). A topic may be selected (e.g., "Olympics" may be selected as a subtopic of "table tennis", as illustrated in FIG. 8) and a chat thread or tool (e.g., within, or associated with an app) may display related messages (e.g., messages 900). Different topics along/associated with the hierarchy of the topic group (e.g., topic group 800) may be selected to control the granularity of the information included in the related messages (e.g., selecting ""table tennis" may cause messages (e.g., messages 700) related to table tennis to be displayed, as illustrated in FIG. 7; selecting "Olympics" may cause messages (e.g., messages 900) related to Olympic table tennis to be displayed, as illustrated in FIG. 9).

Referring now to FIG. 10, another diagram illustrating hierarchical topics displayed in a graph-like format, such as topic graph 1000, is provided in accordance with the exemplary aspects of the present disclosure. As illustrated in the example of FIG. 10, a hierarchical topic group may be constructed by the message browsing component (e.g., message browsing component 217 or message browsing component 313) in an instance in which the message browsing component determines/detects topics discussed in a set of messages. The message browsing component (e.g., message browsing component 217 or message browsing component 313) may analyze the message(s) to determine how closely information in a message relates to a topic to generate/construct the different levels of topics along the hierarchy. A topic may be selected (e.g., "training class" may be selected as a subtopic of "basketball" (e.g., basketball node 1002) in the example of FIG. 10, which may be denoted by a bold "training class" node 1004 and bold lines associated with the "training class" node, as illustrated in FIG. 10) and a chat thread or tool (e.g., within an app) may display related messages (e.g., messages related to basketball training class may be displayed) within a user interface (e.g., display/touchpad/user interface 212 or display 307) or display. In some examples, larger nodes associated with the topics may indicate a higher level of the topic hierarchy than topics with smaller nodes denoting a lower level of the topic hierarchy.

Referring now to FIG. 11, another diagram illustrating hierarchical topics displayed in a graph-like format, such as topic graph 1100, is provided in accordance with the exemplary aspects of the present disclosure. As illustrated in the example of FIG. 11, a hierarchical topic group may be generated/constructed by the message browsing component (e.g., message browsing component 217 or message browsing component 313) in an instance in which the message browsing component determines/detects topics discussed in a set of messages. The message browsing component (e.g., message browsing component 217 or message browsing component 313) may analyze the message(s) to determine how closely information in a message(s) relates to a topic(s) to generate/construct the different levels of topics along the hierarchy. A topic(s) may be selected (e.g., "basketball" may be selected as a subtopic of "Sports" (e.g., sports node 1104) in the example of FIG. 11, which may be denoted by a bold "basketball" node 1102 and bold lines associated with the "basketball" node, as illustrated in FIG. 11) and a chat thread or tool (e.g., within, or associated with an app) may display related messages (e.g., example messages 1200 related to "basketball" illustrated by FIG. 12). In some examples, such as in FIG. 15, the messages 1500 (an e.g., of messages 1200) may be displayed alongside the associated topic graph 1504 (an e.g., of the topic graph 1100 illustrated in FIG. 11) within a user interface (e.g., display/touchpad/user interface 212 or display 307). In some examples, the messages (e.g., messages 1500, messages 1200) may be associated with a time series (e.g., time stamps) such as time series 1502. The messages 1500, the topic graph 1504 alongside the messages 1500 and the time series 1502 may be displayed/presented via a user interface 1501 (e.g., display/touchpad/user interface 212 or display 307). In some examples, larger nodes associated with the topics may indicate a higher level(s) of the topic hierarchy than topics with smaller nodes.

Referring now to FIG. 12, another diagram illustrating a set of messages 1200 relating to a selected topic from a generated/constructed hierarchical topic group is provided in accordance with exemplary aspects of the present disclosure. In the example of FIG. 12, consider a scenario in which the message browsing component (e.g., message browsing component 217 or message browsing component 313) has determined/detected topics in a set of exchanged messages (e.g., the topics may include "sports", "table tennis", "Olympics", "training class", "basketball", "football", and "badminton"). A hierarchical topic group may be generated/constructed (e.g., topic group 1100 as illustrated in FIG. 11) by a message browsing component (e.g., message browsing component 217 or message browsing component 313) and may be displayed within a user interface or display (e.g., display/touchpad/user interface 212 or display 307). The message browsing component (e.g., message browsing component 217 or message browsing component 313) may analyze the message(s) to determine how closely information in a message(s) relates to a topic(s) to generate/construct the different levels of topics along the hierarchy. A topic may be selected (e.g., "basketball" node 1102 may be selected as a subtopic of "sports" (e.g., sports node 1104), as illustrated in FIG. 11) and a chat thread or tool (e.g., within, or associated with, an app) may display related messages 1200. Different topics along/associated with the hierarchy of the topic group 1100 may be selected to control the granularity of the information included in the related messages (e.g., selecting "sports" may cause messages related to all subtopics of "sports" (e.g., table tennis, badminton, basketball, or football) to be displayed; selecting basketball, a subtopic of sports, may cause basketball related messages 1200, as illustrated in FIG. 12, to be displayed).

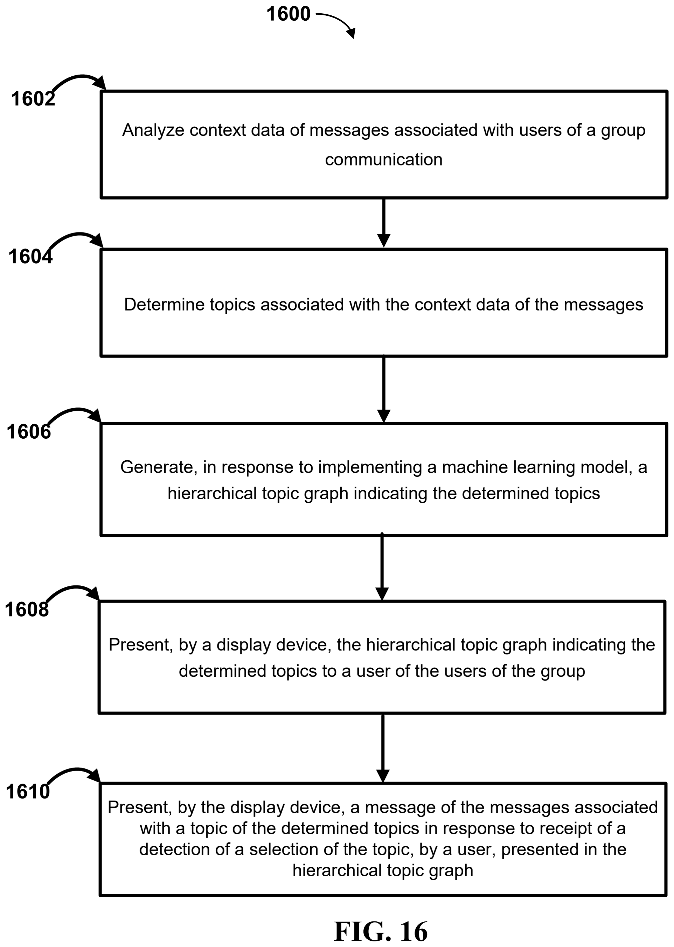

FIG. 13 illustrates an example of a machine learning framework 1300 including machine learning model(s) 1310 and a training database 1320, in accordance with one or more examples of the present disclosure. The training database 1320 may store training data 1330. In some examples, the machine learning framework 1300 may be hosted locally in a computing device or hosted remotely. By utilizing the training data 1330 of the training database 1320, the machine learning framework 1300 may train the machine learning model(s) 1310 to perform one or more functions, described herein, of the machine learning model(s) 1310. In some examples, the machine learning model(s) 1310 may be stored in a computing device. For example, the machine learning model(s) 1310 may be embodied within a communication device (e.g., UE 200). In some other examples, the machine learning model(s) 1310 may be embodied within another device (e.g., computing system 300). Additionally, the machine learning model(s) 1310 may be processed by one or more processors (e.g., processor 202 of FIG. 2, coprocessor 302 of FIG. 3). In some examples, the machine learning model(s) 1310 may be associated with operations (or performing operations) of FIG. 4 and FIG. 16. In some other examples, the machine learning model(s) 1310 may be associated with other operations. In some examples, the machine learning model(s) 1310 may be an example of the message browsing component 117, and/or the message browsing component 313. In other examples, the message browsing component 117, and/or the message browsing component 313 may implement/execute the machine learning model(s) 1310 to perform the functions of the message browsing component 117, and/or the message browsing component 313.

In an example, the training data 1330 may include attributes of thousands of objects. For example, the objects may be posters, brochures, billboards, menus, goods (e.g., packaged goods), books, groceries, Quick Response (QR) codes, smart home devices, home and outdoor items, household objects (e.g., furniture, kitchen appliances, etc.) and any other suitable objects. In some other examples, the objects may be smart devices (e.g., UEs 200, communication devices 135, 140, 145, 150), persons (e.g., users), newspapers, articles, flyers, pamphlets, signs, cars, content items (e.g., messages, notifications, images, videos, audio), and/or the like. Attributes may include, but are not limited to, the size, shape, orientation, position/location of the object(s), etc. The training data 1330 employed by the machine learning model(s) 1310 may be fixed or updated periodically. Training data 1330 may be updated periodically with data accumulated after/in response to any prior update(s). Alternatively, the training data 1330 may be updated in real-time based upon the evaluations performed by the machine learning model(s) 1310 in a non-training mode. This may be illustrated by the double-sided arrow connecting the machine learning model(s) 1310 and stored training data 1330. Some other examples of the training data 1330 may include, but are not limited to, items of content determined as being associated with a network (e.g., the Internet, a social network, etc.). The items of content of the training data 1330 may be analyzed, by a communication device (e.g., computing system 300, UE 200), to understand the context, temporal, user interaction information from historical chat data (e.g., prior exchanged messages or interactive media shared to social networking sites). In examples of the present disclosure, users may need to opt in to the platform, system (e.g., system 130), network (e.g., network 155), or the like for their communications, messages, chat threads, or the like, to be utilized (e.g., utilized by the machine learning model(s) 1310 as part of training data (e.g., training data 1330)). These items of content associated with historical chat threads, exchanged messages, and/or interactive media shared to platforms, (e.g., social networking sites), networks, systems, or the like may be provided as a subset of the training data 1330 to the training database 1320 and may be utilized, in part, to pre-train, and/or train in real-time, the machine learning model(s) 1310. Additionally, other content items such as, for example, prior or currently (e.g., in real-time) determined information about the contents of a set of exchanged messages as described above, contextual data such as user interaction historical data associated with the interests and/or focuses of a user(s) and/or one or more determined topics and/or subjects of communications (e.g., messages) of a group communication as described above may be another subset of the training data 1330. A set of users may be part of a group associated with the group communication. In this regard, in an instance in which the machine learning model(s) 1310 may detect or identify a discussion topic in, or associated with, the training data 1330 and may determine that the discussion topic(s) is of a same or similar type as a topic(s) being analyzed (e.g., in a set of exchanged messages), the machine learning model(s) 1310 may automatically detect/determine topics in the set of exchanged messages being analyzed. In this regard, in some examples of the present disclosure, the machine learning model(s) 1310 may facilitate output/presentation (e.g., via a user interface, a display, etc.) of the automatically detected topics (e.g., determined hierarchies of topics) of discussion in the exchanged messages being analyzed.

In some examples, a component (e.g., message browsing component 217, message browsing component 313) and/or a device (e.g., UE 200, computing system 300) may implement the machine learning model(s) 1310 to automatically detect topics being discussed in the analyzed set of exchanged messages. The automatically detected topics may be displayed as hierarchical topic groups, which may be displayed in a graph-like or word cloud-like format. The hierarchical topic groups may be textual and/or may include text that may include one or more alphanumeric characters. The alphanumeric characters may include, but are not limited to, alphabetic characters, numeric characters, punctuation, symbols and/or the like (e.g., one or more reaction emojis). In some examples, the training data 1330 may be synthetic data, and/or content associated with a network (e.g., the Internet), as described above, such as for example content based one or more chat threads, content based on one or more web pages, content based on attributes (e.g., posters, etc.), and/or one or more reaction emojis, as described above. The machine learning framework 1300 may take raw text such as, for example, written and/or captured text of a user input/captured by a composer, other content or media (e.g., multimedia content such as for example videos, pictures/images, etc.) as the input (e.g., training data 1330) for the machine learning model(s) 1310. The machine learning framework 1300 may also facilitate rendering a visualization(s) of the raw text, other content and/or media, which may be generated by the machine learning framework 1300, implementing/executing the machine learning model(s) 1310, as results (e.g., one or more labels) for/associated with the training data 1330. The machine learning model(s) 1310 may be able to learn from the training data 1330 (e.g., the input text, content, media) to predict and/or determine the output (e.g., a hierarchical topic group(s)) to render as one or more results. The results of the output may be displayable/presentable via a device (e.g., via a display/touchpad/user interface(s) 212 and/or display 307).

In some examples, the synthetic data may, but need not, be modified/changed to certain content that may be marked based on a tag/format, or the like from data associated with for example a user(s) that may have edited or created this data to enable the machine learning framework 1300 to form/generate new data examples. In this manner, the machine learning framework 1300 may have diversity and may include many more datasets for the training data 1330.

Referring to FIG. 16, a process 1600 to generate a hierarchical topic group and to determine related messages are provided in accordance with exemplary aspects of the present disclosure. At operation 1602, a device (e.g., UE 200, computer system 300) may analyze context data of messages associated with users of a group communication. In some examples, the group communication may be a set of messages of a group of users, group chat messages, messages of a chat thread, group chat messages of a messaging application or other application, or the like. At operation 1604, a device (e.g., UE 200, computer system 300) may determine topics (e.g., sports, basketball, football, table tennis, badminton, training class, Olympics, etc.) associated with the context data of the messages.

At operation 1606, a device (e.g., UE 200, computer system 300) may generate, in response to implementing a machine learning model (e.g., machine learning model(s) 1330), a hierarchical topic graph (topic graphs 500, 600, 800, 1000, 1100) indicating the determined topics. At operation 1608, a device (e.g., UE 200, computer system 300) may present, by a display device, the hierarchical topic graph indicating the determined topics to a user of the users of the group. The display device may be a display/touchpad/user interface(s) 212 and/or display 307. At operation 1610, a device (e.g., UE 200, computer system 300) may present, by the display device, a message(s) (e.g., messages 700, 900, 1200) of the messages associated with a topic (e.g., table tennis, basketball, etc.) of the determined topics in response to detection of a selection of the topic, by a user, presented in the hierarchical topic graph.

The context data may include determined semantic context associated with the messages. The device (e.g., UE 200, computing system 300) may present the hierarchal topic graph in response to detection of an input of a search for the message or a search for a corresponding topic associated with the message. The hierarchical topic graph may indicate the determined topics include a plurality of nodes associated with the determined topics.

The device (e.g., UE 200, computing system 300) may detect a selection of one or more of the nodes, being presented by a display or a user interface. The nodes may be associated with different sets of the messages of the users associated with a corresponding topic of the selected one or more nodes. The device (e.g., UE 200, computing system 300) may generate a first node of the hierarchical topic graph to include a larger graphical node size in relation to a smaller graphical size of another node of the hierarchical topic graph in response to determining that the first node includes a quantity of more associated messages corresponding to a first topic of the first node than a lower quantity of other messages corresponding to a second topic of the second node.

The second topic of the second node may include a sub-topic of the first topic of the first node and the sub-topic and the first topic may be associated with a same category (e.g., sports, cooking, dancing, etc.) or genre. The device (e.g., UE 200, computing system 300) may generate the hierarchical topic group to include topic groups based on one or more topics being contextually related to one or more other topics, which may be determined based on the messages. The topic groups may be organized based on different levels in the hierarchical topic group.

The device (e.g., UE 200, computing system 300) may determine categories (e.g., sports, cooking, fishing, etc.), and/or genres (e.g., music, science fiction, fantasy, etc.), of detected topics of the messages associated with the topic groups. The device (e.g., UE 200, computing system 300) may present, by the display device, the hierarchical topic graph in relation to a determined result message of the search for the message or the search for the corresponding topic associated with the message.

The systems and methods of the exemplary aspects of the present disclosure may implement a machine learning model including training data pre-trained, or trained in real-time, on one or more detected topics associated with one or more communications between one or more users of a group. The system may automatically detect topics in a set of messages. The system may construct hierarchical topic groups. The system may display the hierarchical topic groups. The system may allow selection of one or more of the displayed topics. The system may display one or more messages related to the selected topic(s).

The foregoing description of the examples has been presented for the purpose of illustration; it is not intended to be exhaustive or to limit the patent rights to the precise forms disclosed. Persons skilled in the relevant art can appreciate that many modifications and variations are possible in light of the above disclosure.

Some portions of this description describe the examples in terms of applications and symbolic representations of operations on information. These application descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as components, without loss of generality. The described operations and their associated components may be embodied in software, firmware, hardware, or any combinations thereof.

Any of the steps, operations, or processes described herein may be performed or implemented with one or more hardware or software components, alone or in combination with other devices. In one example, a software component is implemented with a computer program product comprising a computer-readable medium containing computer program code, which can be executed by a computer processor for performing any or all of the steps, operations, or processes described.

Examples also may relate to an apparatus for performing the operations herein. This apparatus may be specially constructed for the required purposes, and/or it may comprise a computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Examples also may relate to a product that is produced by a computing process described herein. Such a product may comprise information resulting from a computing process, where the information is stored on a non-transitory, tangible computer readable storage medium and may include any example of a computer program product or other data combination described herein.

Finally, the language used in the specification has been principally selected for readability and instructional purposes, and it may not have been selected to delineate or circumscribe the inventive subject matter. It is therefore intended that the scope of the patent rights be limited not by this detailed description, but rather by any claims that issue on an application based hereon. Accordingly, the disclosure of the examples is intended to be illustrative, but not limiting, of the scope of the patent rights, which is set forth in the following claims.

## Claims

1. A method comprising:
analyzing context data of messages associated with users of a group communication;
determining topics associated with the context data of the messages;
generating, in response to implementing a machine learning model, a hierarchical topic graph indicating the determined topics;
presenting, by a display device, the hierarchical topic graph indicating the determined topics to a user of the users of the group; and
presenting, by the display device, a message of the messages associated with a topic of the determined topics in response to receipt of a detection of a selection of the topic, by a user, presented in the hierarchical topic graph.

2. The method of claim 1, further comprising:
presenting the hierarchal topic graph in response to detection of an input of a search for the message or a search for a corresponding topic associated with the message.

3. The method of claim 1 or 2, wherein the hierarchical topic graph indicates the determined topics comprises a plurality of nodes associated with the determined topics, and the method further comprises:
detecting a selection of one or more of the nodes, being presented by a display or a user interface, the nodes associated with different sets of the messages of the users associated with a corresponding topic of the selected one or more nodes.

4. The method of any preceding claim, further comprising:
generating a first node of the hierarchical topic graph to comprise a larger graphical node size in relation to a smaller graphical size of another node of the hierarchical topic graph in response to determining that the first node comprises a quantity of more associated messages corresponding to a first topic of the first node than a lower quantity of other messages corresponding to a second topic of the second node.

5. The method of claim 4, wherein:
the second topic of the second node comprises a sub-topic of the first topic of the first node; and
the sub-topic and the first topic comprise a same category or genre.

6. The method of any preceding claim, further comprising:
generating the hierarchical topic group to comprise topic groups based on one or more topics being contextually related to one or more other topics, determined based on the messages, wherein the topic groups are organized based on different levels in the hierarchical topic group.

7. The method of claim 6, further comprising:
determining categories, or genres, of detected topics of the messages associated with the topic groups.

8. The method of any preceding claim, further comprising:
presenting, by the display device, the hierarchical topic graph in relation to a determined result message of the search for the message or the search for the corresponding topic associated with the message.

9. The method of any preceding claim, wherein the context data comprises determined semantic context associated with the messages.

10. An apparatus comprising:
one or more processors;
a display device; and
at least one memory storing instructions, that when executed by the one or more processors, cause the apparatus to carry out the method of any preceding claim.

11. A computer-readable medium storing instructions that, when executed by a computing system comprising one or more processors and a display device, cause the computing system to carry out the method of any of claims 1 to 9.

12. A computer program product comprising instructions that, when executed by a computing system comprising one or more processors and a display device, cause the computing system to carry out the method of any of claims 1 to 9.
